# EUROPEAN PATENT SPECIFICATION

(11) **EP 3 935 292 B1**
(45) Date of publication and mention of the grant of the patent: **07.08.2024**
(21) Application number: 20755977.4
(22) Date of filing: 07.02.2020
(51) Int. Cl.: F16C 9/04, F16J 7/00

(54) **CONNECTING ROD AND PROCESS FOR ASSEMBLING**
PLEUELSTANGE UND VERFAHREN ZUM ZUSAMMENBAU
BIELLE ET PROCÉDÉ DE MONTAGE

(30) Priority: 11.02.2019 SE 1950163
(43) Date of publication of application: 12.01.2022
(73) Proprietor: Eovidar AB, 232 35 Arlöv (SE)
(72) Inventor: Wettermark, Fredrik, 216 22 Limhamn (SE)
(74) Representative: Zacco Sweden AB
(86) International application number: PCT/SE2020/050124
(87) International publication number: WO 2020/167213

(56) References cited:
- EP-A2- 0 137 261
- WO-A1-2012/061034
- WO-A1-98/24584
- CH-A5- 652 176
- DE-A1- 19 825 534
- GB-A- 526 309
- JP-A- 2012 246 951
- JP-A- 2013 002 557
- JP-A- H06 238 600
- JP-A- S5 977 117
- JP-A- S57 208 311
- JP-U- S55 147 527
- JP-U- S55 147 527
- US-A- 4 198 879
- US-A- 4 546 669
- US-A- 5 016 807
- US-A- 5 154 098
- US-A1- 2019 024 702

## Description

### Technical Field

The present invention relates generally to the field of connecting rods for a combustion engine.

### Background

Connecting rods are used in combustion engines to connect the piston and the crankshaft of the combustion engine. Connecting rods provide a pivotal connection to the piston pin or gudgeon pin of a piston and further a pivotal connection to a rod-bearing journal of a crankshaft. Bearing elements may be provided between the piston pin or gudgeon pin and the connecting rod and further between the rod-bearing journal and the connecting rod.

Connecting rods have traditionally been manufactured from metal, primarily steel, however several attempts have been made to use other materials such as composite materials, and primarily carbon fiber reinforced resins. However, there have not been any successful attempt to manufacture a connecting rod of a composite material since the connection to the crankshaft has been insufficient in different ways.

Connecting rods may be manufactured in one or two-piece configurations. The one-piece configuration type is normally only used for single cylinder engines, where the crankshaft may be assembled around the connecting rod. The two-piece configuration is the commonly used type for multi-cylinder engines where the crankshaft typically is a single element with two or more rod bearing journals. The two-piece connecting rod is assembled around the rod-bearing journal using connection elements, such as bolts. An important feature of the connecting rods in the prior art is that connecting rods should be assembled in a way that will enable the separation of the connecting rod from the rod-bearing journal for maintenance or replacement purposes.

The use of composite materials in connecting rods presents particular challenges in respect of the connection elements for connecting the two connecting rod parts. Threads provided in the composite material are insufficient from a durability perspective and providing metal thread parts within the composite material does not fully resolve the challenges and further makes the manufacturing of the connecting rod more labor intensive and thereby more cost intensive. A prior art solution of producing a connecting rod for a combustion engine is presented in the patent documents JPS55147527U, where a fiber-reinforced composite material is used for a connecting rod.

For these reasons, there is a need for improvement in the area of two part composite connecting rods.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

Furthermore, it is to be noted that the terms composite fiber(s) and composite fiber or composite fiber part may be used interchangeably in this disclosure if not explicitly stated otherwise.

An object of the present disclosure is to provide a connection rod, which seek to mitigate, alleviate, or eliminate one or more of the above-identified deficiencies in the art and disadvantages singly or in any combination.

According to the invention the objective is achieved through a connecting rod for a combustion engine according to claim 1.

By coming to the insight that the feature of that a connecting rod needs to be disassembled in a traditional way could be excluded, the connecting rod can be made in new and inventive ways. In fact, the insight as such is an important part of the invention.

By providing an adhesive connection between the two connecting rod parts, the disadvantages of the otherwise necessary connection elements are overcome and a more durable and lighter construction of the connecting rod and crankshaft assembly is achieved. The adhesive connection means that the connecting rod needs to be disassembled in a new way or not disassembled at all.

A further advantage is that the connection of the two parts of the connecting rod does not need to be pre-tensioned, as is the case with a connection comprising bolts. This reduces the stress on the connecting rod.

According to an aspect the first and the second connecting rod parts are manufactured from a composite material. By having a connecting rod in a composite material it could be heated up around the split line/connection to make the adhesive joint able to break up in case of replacement of this and the bearing elements between the connecting rod of the rod-bearing journal. This is a possibility when using a composite material, such as carbon fiber reinforced resin, as opposed to the normally used metal connecting rods, which would need to be assembled and dissembled using removable connecting elements.

A further advantage of is that the weight of the connection rod could be reduced. The weight of the connection rod could be reduced by more than 50% in relation to a traditional connection rod of metal. Such a reduction will lower the weight of the rotating mass on both connecting rod and on crankshaft and this will reduce energy consumption and increase RPM and power. The reduced mass will thus reduce the back and forth mass forces acting on the connecting rod and the crankshaft.

A further advantage of is that the shape of the connection rod could be made more aerodynamically streamlined to reduce the friction and resistance when it is moved in a motor, which would even further reduce the energy consumption of the engine.

According to an aspect the first and the second connecting rod parts each comprise a first and a second assembly surfaces that are configured for mutual engagement.

According to an aspect an area of the first and the second assembly surfaces are larger than the area of a cross sectional plane of the connecting rod at the connection. By having an increased area the adhesive can act over a larger area without increasing the size of the connection rod. The increased area extends in different directions and especially in directions that are different from a plane of the cross section at the connection. By this the adhesive connection will not only be exposed to pull/push forces when the connection rod is moving in an engine, but the forces will be shearing forces between the first and the second assembly surfaces. An adhesive is much stronger when exposed to shearing forces, i.e. forces acting parallel to the first and the second assembly surfaces.

According to an aspect the first assembly surfaces comprises a first inclined connection area and the second assembly surfaces comprise a second inclined connecting area complimenting the first connection area, wherein the surfaces are inclined in relation to the cross sectional plane at the connection to provide an enhanced shear forces resistance in the adhesive connection. By having the inclined connection areas at which the forces are transfer are increased and the transferred forces are shearing forces.

According to an aspect the first assembly surfaces comprises a number of teeth and/or serrations and the second assembly surfaces comprise a number of teeth and/or serrations complimenting the number of teeth or serrations of the first assembly surface. By having a surface that is changing in two directions such as the teeth's or serrations, the connection of the first and the second connecting rod part could be guided in two directions during assembly.

According to an aspect one of the first and the second connecting rod parts comprises an indicator part that indicates the correct assembly of the first and the second connecting rod parts. By having an indicator part it can be seen if the connecting rod is assembled correct or not.

According to an aspect the first assembly surfaces comprises a number of tongues and/or grooves and the second assembly surfaces comprise a number of tongues and/or grooves corresponding to the tongues and grooves of the first assembly surface. By having a number of tongues and/or grooves, the connection areas at which the forces are transfer are even further increased and the transferred forces are shearing forces.

According to an aspect the first assembly surfaces comprises a surface structure and the second assembly surfaces comprises a surface structure corresponding to the surface structure of the first assembly surface, wherein the surface structure is configured to only allow the surfaces to be connected if the first connecting rod part is position in a predefined position in relation to the second connecting rod part.

According to an aspect the connecting rod further comprising a ring shaped bearing comprising a first part connected to the first connecting rod part and a second part connected to the second connecting part, wherein the ring shaped bearing is configured to be position between the first and the second connecting rod parts and the crankshaft when the connecting rod is assembled to the crankshaft.

According to an aspect the composite fiber product comprises one or more of a glass fiber, a carbon fiber, a aramid fiber, a basalt fiber, a natural fiber, a flax fiber, a hemp fiber, organic or non-organic fiber or similar.

According to an aspect, the ring shaped bearing comprises a first part and a second part. According to an aspect the first part and the second part has a block arc shape. According to an aspect the block arc shape is of substantially 180°.

According to an aspect, a first end of the first part comprises a male connecting part. According to an aspect, a second end of the first part comprises a female connecting part. According to an aspect, a first end of the second part comprises a female connecting part. According to an aspect, a second end of the second part comprises a male connecting part.

According to an aspect, the male part of the first part is configured to interact with the female part of the second part and the male part of the second part is configured to interact with the female part of the first part when the bearing is mounted around a crankshaft. According to an aspect the connection between the male part of the first part and the female part of the second part and the male part of the second part and the female part of the first part is configured to align the first part in relation to the second part.

According to an aspect the connection between the male part of the first part and the female part of the second part and the male part of the second part and the female part of the first part is configured to align the first and the second connecting rod parts when the connecting rod is mounted on a crank shaft. An advantage of this is that the bearing could be used to secure that the connecting rod is positioned in an intended way in relation to the crankshaft.

According to an aspect the first part is connected to the first connecting rod part. According to an aspect the second part is connected to the second connecting rod part.

According to an aspect the first part is glued to the first connecting rod part. According to an aspect the second part is glued to the second connecting rod part. By connecting the first and second parts by adhesive, the bearing will not rotate in relation to the first and the second connecting rod parts when the connecting rod is mounted on a crankshaft. This will reduce the friction between the bearing and the first and the second connecting rod parts and thereby reduce creation of heat.

According to an aspect the first and second parts are glued to the first and the second connecting rod parts with an adhesive that can transfer heat. By this the connecting rod can assist in transfer heat from the engine to reduce the temperature.

According to an aspect the bearing comprises two flanges, a first and a second flange, that extends radially outwards. The first flange extends radially outwards from a first edge of the ring shape and the second flange extends radially outwards from an opposite edge of the ring shape of the bearing. The first and the second flanges together with the ring shape of the bearing creates a first and a second outward directed U-shape parts.

According to an aspect, the first connecting rod part is configured to be arranged and/or connected in the first U-shaped part. The second connecting rod part is configured to be arranged and/or connected in the second U-shaped part. According to an aspect, the flanges are configured to restrict movement of the bearing in relation to the first and second connecting rod parts in an axial direction, i.e. in the direction of the crankshaft.

According to an aspect the flanges are configured to protect the composite fiber parts of the connecting rod to come in direct contact with a moving part.

According to an aspect the first assembly surfaces comprises a first hole in the radial direction and the second assembly surfaces comprises a second hole in the radial direction, wherein the first hole is configured to be aligned with the second hole when the first and the second connecting rod parts are connected. Put in another way, the first and the second holes in the assembly surfaces extends in the radial direction of the crankshaft and the second hole in the connection rod for accommodating the crankshaft. According to an aspect the connecting rod comprises a bolt or a plug that is arranged in the first and the second hole to further secure the connection of the first connecting rod part to the second connecting rod part. In addition, the interaction of the bolt and the holes aligns the position to the first connecting rod part in relation to the second connecting rod part.

According to the invention the first and the second connecting rod parts are manufactured from a board of composite fibers. According to an aspect two or more first and second connecting rod parts are cut from a board of composite fibers. According to an aspect, the direction of the fibers of the board are adapted to the positions at which the first connecting rod part and the second connecting rod part should be cut. By cutting one or more of the first and the second connecting rod parts from one and the same board, both the production cost and time of producing the connection rod could be reduced. Further, by cutting the first and the second connecting rod parts from a board of composite fibers the first and the second connection rod parts could be mass-produced, in comparison to a custom-made production.

According to an aspect the parts of the connection rod is coated with one or more layers of a protective lacquer. The protective lacquer restrict or at least reduces that the material of the connection rod is affected by the chemicals, such as oil, and the heat of the engine. According to an aspect the surfaces of the connection rod are sealed by a sealing/protecting layer of polymer after it has been machined into the intended shape. The polymer could be a protective lacquer.

According to the invention the thickness of the cured board and the number of layers of composite fibers in the board corresponds to the thickness of the connecting rod.

In an additional aspect of the invention, the objective is achieved through a crankshaft and connecting rod, comprising a crankshaft with at least one rod-bearing journal and at least one connecting rod according the above.

In a still further aspect of the invention the objective is achieved by a method of assembling a crankshaft and a connecting rod according to the above. The method comprising the steps of: providing a crankshaft with at least one rod bearing journal, applying an adhesive to the first and/or the second assembly surfaces of the connecting rod, pressing the first and the second connecting rod parts together around the one rod bearing journal to assemble the connecting rod to the crankshaft.

In a still further aspect of the invention the objective is achieved by a method of dissembling the crankshaft and a connecting rod according to the above. The method comprising the steps of: separating the connection rod from the crankshaft by one or more of the steps: heating the connection rod to a temperature at which the adhesive is returned to a liquid form, sawing the connection rod into two pieces or crushing at least parts of the connection rod.

According to an aspect the adhesive connection is a permanent connection. By permanent connection means that the connecting rod needs to be broken apart in case of replacement of this or possibly bearing elements between the connecting rod of the rod-bearing journal. This is a possibility when using a composite material, such as carbon fiber reinforced resin, as opposed to the normally used metal connecting rods, which would need to be assembled and dissembled using removable connecting elements.

In a still further aspect of the invention the objective is achieved by a method of manufacturing a connection rod according to the above. The method comprising the steps of producing a board of composite fibers, processing the board by an abrasive process to producing one or more connecting rods according to the above from the board.

According to an aspect, the step of producing the board comprises the steps of applying several layers of composite fibers to a surface, wherein the directions and composition of the layers are adapted to the position, size, shape and/or the type of connecting rod that should be manufactured.

According to an aspect the method comprises the step of coating the connection rod 1 with one or more layers of a protective polymer or lacquer.

Generally, all terms used in the claims are to be interpreted according to their ordinary meaning in the technical field, unless explicitly defined otherwise herein. All references to "a/an/the [element, device, component, means, etc.]" are to be interpreted openly as referring to at least one instance of said element, device, component, means, etc., unless explicitly stated otherwise. Further, by the term "comprising" it is meant, "comprising but not limited to" throughout the application.

### Brief description of the drawings

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments and aspects.
Fig. 1 shows an embodiment of the connecting rod not part of the invention;
Fig. 2 shows the embodiment of the connecting rod in fig 1 not part of the invention in a further view;
Fig. 3 shows an embodiment of the connecting rod according to the invention;
Fig. 4 shows an embodiment of the connecting rod according to the invention;
Fig. 5 shows an embodiment of the connecting rod according to the invention.
Fig. 6 shows an embodiment of the connecting rod according to the invention
Fig. 7 shows the embodiment of the connecting rod in fig 6 according to the invention in a connected state;
Fig. 8 shows an embodiment of the connecting rod according to the invention with an assembly indicator,
Fig 9. shows an embodiment of the connecting rod comprising a ring shaped bearing according to an aspect of the invention, and
Fig. 10 shows a cross sectional view of an embodiment of a bearing according to an aspect of the invention.

### Detailed Description

The present invention will now be described more fully hereinafter with reference to the accompanying drawings, in which exemplary embodiments and aspects of the invention are shown.

The invention may, however, be embodied in many different forms and should not be construed as limited to the embodiments and aspects set forth herein; rather, these embodiments and aspects are provided for thoroughness and completeness. Like reference characters refer to like elements throughout the description. The drawings are not necessarily to scale and certain features may be exaggerated in order to better illustrate and explain the exemplary embodiments of the present invention.

The terminology used herein is for the purpose of describing particular aspects of the disclosure only. As used herein, the singular forms "a", "an" and "the" are intended to include the plural forms as well, unless the context clearly indicates otherwise.

In some implementations and according to some aspects of the disclosure, the functions or steps in the method can occur out of the order noted in the operational illustrations. For example, two steps shown in succession can in fact be executed substantially concurrently or the steps can sometimes be executed in the reverse order, depending upon the functionality/acts involved.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In the following, embodiments and aspects will be described in connection with the drawings.

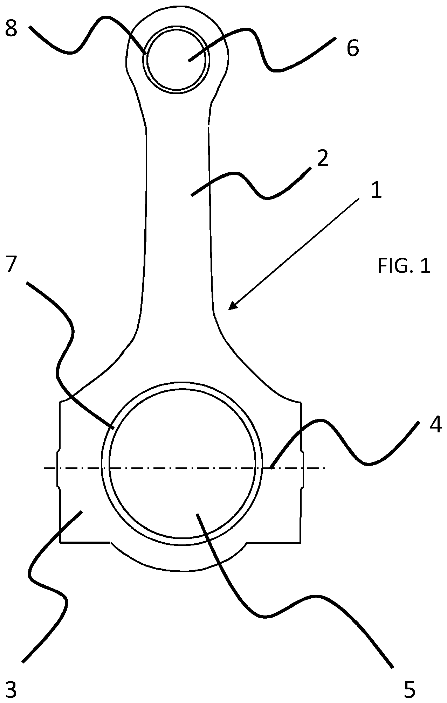

Fig. 1 illustrates a connecting rod 1 comprising a first connecting rod part 2 and a second connecting rod part 3. The connection rod 1 comprise a first hole at one end of the first connecting rod part 2. The first hole 6 is configured to be connected to a piston. The connecting rod comprise a second hole 5 that is configured to be connected to a crankshaft. The second hole 5 is defined by the first connecting rod part 2 and the second connecting rod part 3. The two rod parts are assembled/connected/attached at an assembly line 4. The two connecting rod parts 2, 3 at their assembly line 4 forms a circular opening 5, i.e. the second hole 5, for accommodating a rod-bearing journal of a crankshaft. At the opposite end of the connecting rod 1, a circular opening 6, i.e. the first hole 6, is provided for accommodating the piston pin or gudgeon pin of a piston.

According to an aspect the first connecting rod part 2 and the second connecting rod part 3 being manufactured from a composite material as described below. Put in another way, the first connecting rod part 2 and the second connecting rod part 3 comprise a composite material. According to an aspect the connecting rod 1 comprising a ring shaped bearing 7. The ring shaped bearing 7 comprise a firs part 7a connected to the first connecting rod part 2 and a second part 7b connected to the second connecting part 3. The ring shaped bearing 7 is configured to be position between the first and the second connecting rod parts 2, 3 and a crankshaft when the connecting rod 1 is assembled to the crankshaft. According to an aspect the ring shaped bearing 7 is arranged in/ connected to the second hole 5. According to an aspect the ring shaped bearing 7 is made of metal.

According to an aspect the connecting rod 1 comprise a bearing 8 connected to the first hole 6. The bearing 8 is configured to be position between the first connecting rod part 2 and the piston.

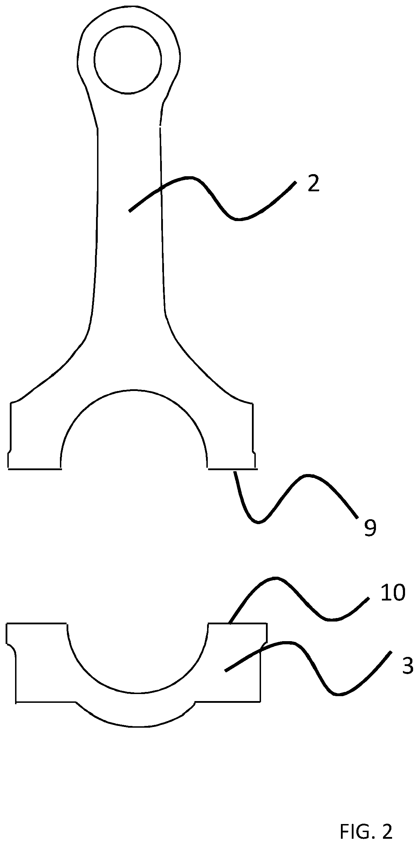

Fig. 2 illustrates the connecting rod of fig. 1, where the first and second connecting rod parts 2, 3 are separated and where the bearing parts are removed from the first and second connecting rod parts 2, 3. The first connecting rod part 2 comprises at the assembly line two first assembly surfaces 9. The second connecting rod part 3 comprises at the assembly line two second assembly surfaces 10. The first and second assembly surfaces 9, 10 are here shown as plane surfaces. The connecting rod 1 is primarily, but not only, subject to push and pull forces when the piston is moved back and forward to rotate the crankshaft. The first and second assembly surfaces 9, 10 are according to an aspect provided with a different geometry that increase the surface area and hence better may accommodate the push and pull forces applied to the connecting rod 1. The connection at the assembly line 4 will transfer the pull forces between the first and second connecting rod parts 2, 3.

When the connecting rod 1 is connected to a crankshaft, an adhesive is applied to the first and/or second assembly surfaces 9, 10. Thereafter the first assembly surfaces 9 is pressed against the second assembly surfaces 10 with the crankshaft in the second hole 5. When the adhesive is cured, the connecting rod 1 is assembled to the crankshaft.

As the piston pushes the connecting rod 1 downwards the connecting rod 1 will be compressed and push forces are transferred between the first and second connecting rod parts 2, 3 at the assembly line 4. As the piston is moved upwards the connecting rod 1 is exerted to pull forces.

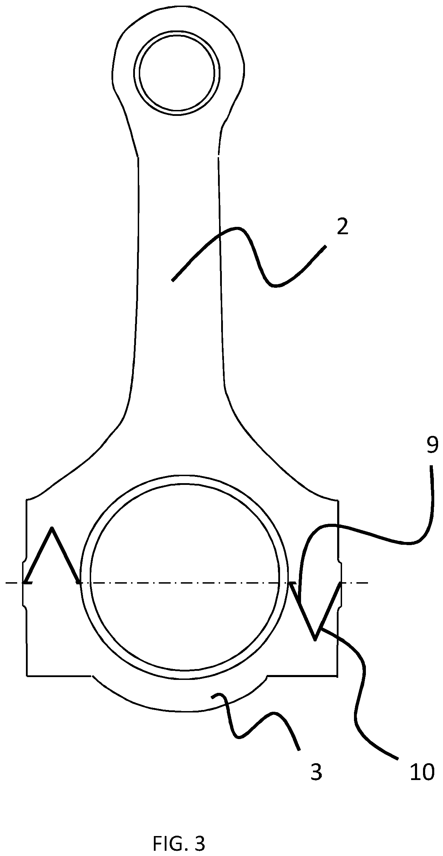

Fig. 3 illustrates an aspect of the connecting rod 1. The geometry of the first and the second assembly surfaces 9, 10 that are connecting the first and second connecting rod parts are larger than the surfaces as disclosed in fig 1 and 2. Each of the first and second assembly surfaces 9, 10 are provided with corresponding and mating teeth and grooves that may accommodate the teeth of an opposed assembly surface. In this case the teeth and grooves are provided with a general direction parallel with the rotational axis of the rod bearing journal to be accommodated between the two connecting rod parts. By having surfaces 9, 10 that are angled in relation to a cross sectional plane at the assembly line 4 the area of the surfaces 9, 10 that the adhesive could be applied to be increased. Further, the angled surfaces also achieves that the forces are transferred as shear-forces between the first and second connecting rod parts 2, 3. The adhesive is much stronger in transferring/taking up shear-forces than pull-forces. Thus, the mating teeth and grooves will improve the strength of the connection in two ways, i.e. that it transfers shear forces and that the area that the adhesive is applied to is increased.

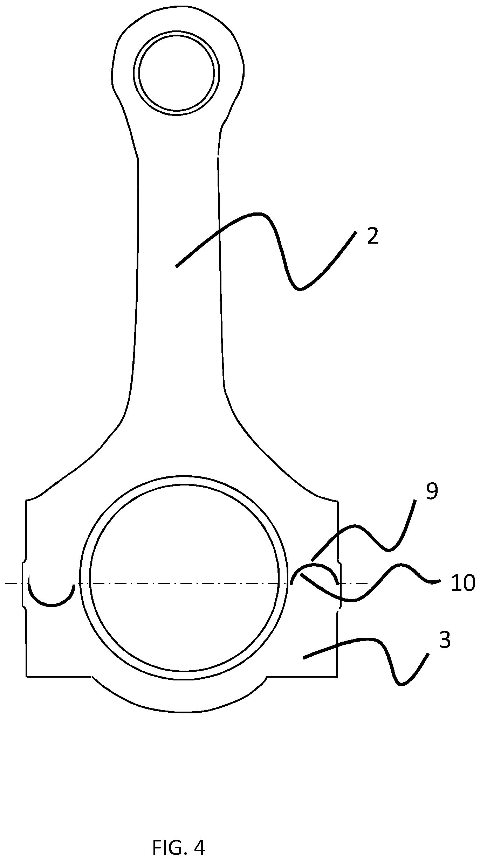

Fig. 4 illustrates an aspect of the geometry of the first and second assembly surfaces 9, 10 interconnecting the first and the second connecting rod parts 2, 3. Each of the first and second assembly surfaces 9, 10 are provided with corresponding and mating rounded protrusions and grooves that may accommodate the teeth of an opposed assembly surface. In this case the rounded protrusions and grooves are provided with a general direction parallel with the rotational axis of the rod bearing journal to be accommodated between the two connecting rod parts.

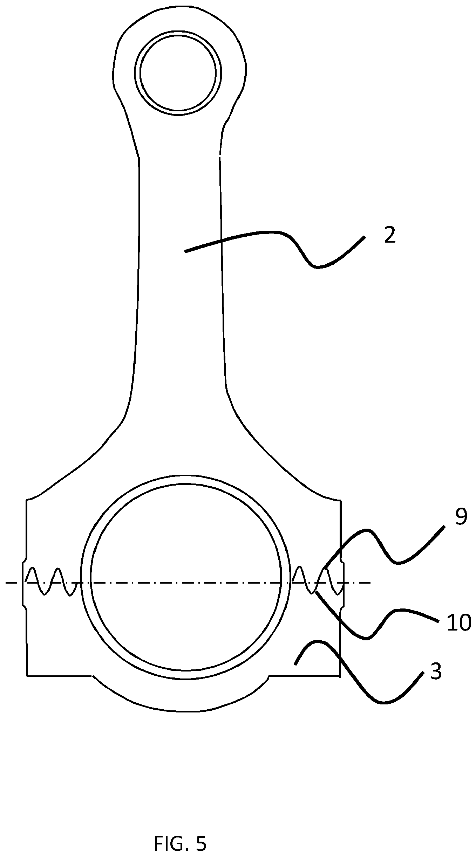

Fig. 5 illustrates an aspect of the geometry of the first and second assembly surfaces 9, 10 interconnecting the first and the second connecting rod parts 2, 3. Each of the first and second assembly surfaces 9, 10 are provided with corresponding and mating teeth and in-between these teeth, grooves that may accommodate the teeth of an opposed assembly surface. In this case the teeth and grooves are provided with a general direction parallel with the rotational axis of the rod bearing journal to be accommodated between the two connecting rod parts. This aspect differs from the embodiment shown in fig. 3 in that a multitude of teeth and corresponding grooves are provided in the assembly surfaces.

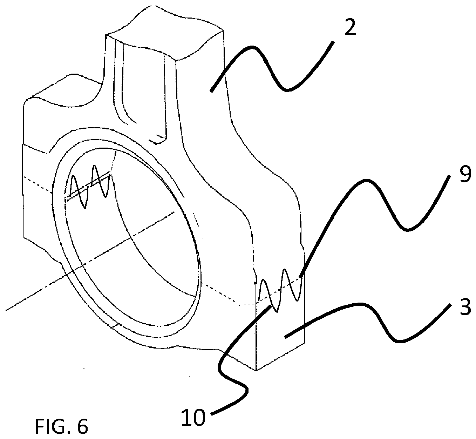

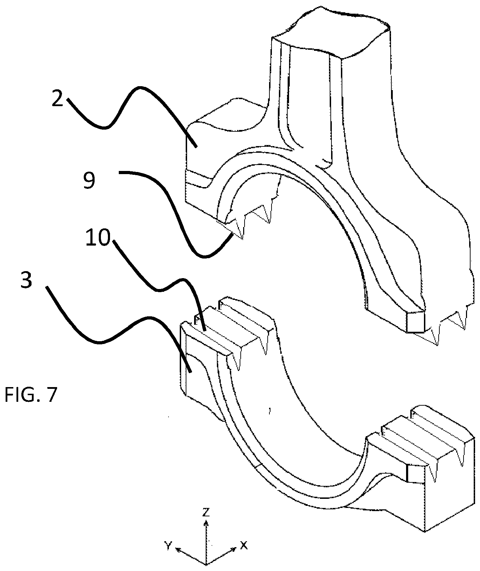

Fig. 6 and 7 illustrates an aspect of the geometry of the first and second assembly surfaces 9, 10 interconnecting the first and second connecting rod parts 2, 3. Each of the first and second assembly surfaces 9, 10 are provided with corresponding and mating teeth and in-between these teeth, grooves that may accommodate the teeth of an opposed assembly surface. In this case the teeth and grooves are provided with a general direction perpendicular with the rotational axis of the rod bearing journal to be accommodated between the two connecting rod parts.

It should be appreciated that although specific embodiments of the assembly surfaces have been illustrated variations of these comprising different number of teeth or protrusions and different directions of these may be provided without deviating from the principles of the invention. Correspondingly, different angles and/or rounding of the teeth or protrusions may be provided without deviating from the principles of the invention.

Although not specified it should be appreciated that the assembly may be made with any suitable adhesive that provide for a sufficient adhesion and cohesion of the connection between the two connecting rod parts.

When a need for dissembling the connecting rod arises, e.g. in case of replacement of this or possibly bearing elements between the connecting rod of the rod-bearing journal, the connecting rod needs to be demolished due to the permanent connection established between the two parts. This demolishment is a possibility when using a composite material, such as carbon fiber reinforced resin, as opposed to the normally used metal connecting rods, which would need to be assembled and dissembled using removable connecting elements.

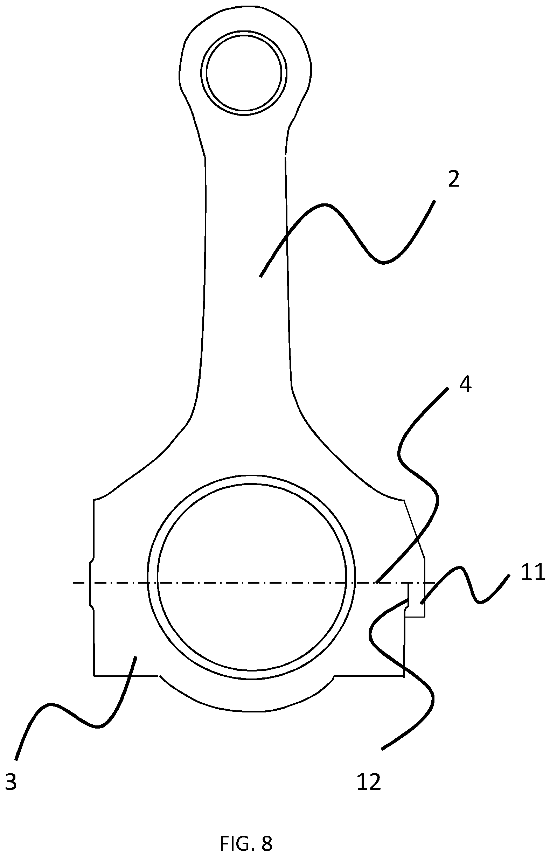

Fig. 8 illustrates an aspect of an assembly assistive feature of the connecting rod 1, where on the first connecting rod part 2, a protruding arm 11 is provided and configured for engagement with a part 12 of the second connecting rod part 3, in this case a protrusion 12 on the side of the second connecting rod part 3, when the first and the second connecting rod parts 2, 3 are fully engaged. The assembly assistive feature may be provided on one side of the connecting rod as shown or may be provided on two opposed sides of the connecting rod 1.

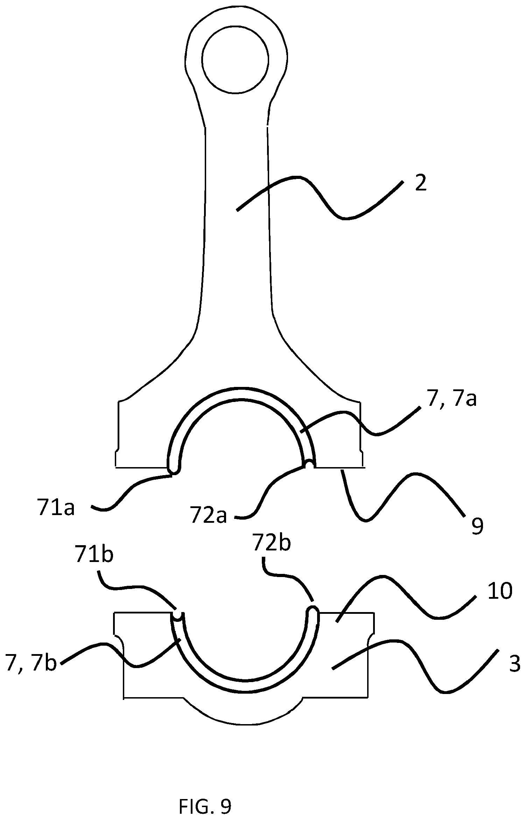

According to an aspect, as is shown in Fig. 9, the ring shaped bearing 7 comprises a first part 7a and a second part 7b. According to an aspect the first part 7a and the second part 7b has a block arc shape. The block arc shape is of substantially 180°. Put in another way, the first part 7a and the second part 7b has the shape of a half ring.

According to an aspect, a first end 71a of the first part 7a comprises a male connecting part 71a. According to an aspect, a second end 72a of the first part 7a comprises a female connecting part 71a. According to an aspect, a first end 71b of the second part 7b comprises a female connecting part 71b. According to an aspect, a second end 72b of the second part 7b comprises a male connecting part 72b.

According to an aspect, the male part 71a of the first part 7a is configured to interact with the female part 71b of the second part 7b and the male part 72b of the second part 7b is configured to interact with the female part 72a of the first part 7a when the bearing 7 is mounted around a crank shaft. According to an aspect the connection between the male part 71a of the first part 7a and the female part 71b of the second part 7b and the male part 72b of the second part 7b and the female part 72a of the first part 7a is configured to align the first part 7a in relation to the second part 7b.

According to an aspect the connection between the male part 71a of the first part 7a and the female part 71b of the second part 7b and the male part 72b of the second part 7b and the female part 72a of the first part 7a is configured to align the first and the second connecting rod parts 2, 3 when the connecting rod 1 is mounted on a crank shaft. An advantage of this is that the bearing could be used to secure that the connecting rod 1 is positioned in an intended way in relation to the crankshaft.

According to an aspect the first part 7a is connected to the first connecting rod part 2. According to an aspect the second part 7b is connected to the first connecting rod part 2. According to an aspect the first part 7a is fixedly connected to the first connecting rod part 2. According to an aspect the second part 7b is fixedly connected to the first connecting rod part 2.

According to an aspect the first part 7a is glued to the first connecting rod part 2. According to an aspect the second part 7b is glued to the second connecting rod part 3. By connecting the first and second parts 7a, 7b by adhesive, the bearing 7 will not rotate in relation to the first and the second connecting rod parts 2, 3 when the connecting rod 1 is mounted on a crankshaft. This will reduce the friction between the bearing 7 and the first and the second connecting rod parts 2, 3 and thereby reduce creation of heat.

According to an aspect the first and second part 7a, 7b is glued to the first and the second connecting rod parts 2, 3 with an adhesive that can transfer heat. By this the connecting rod can assist in transfer heat from the engine to reduce the temperature.

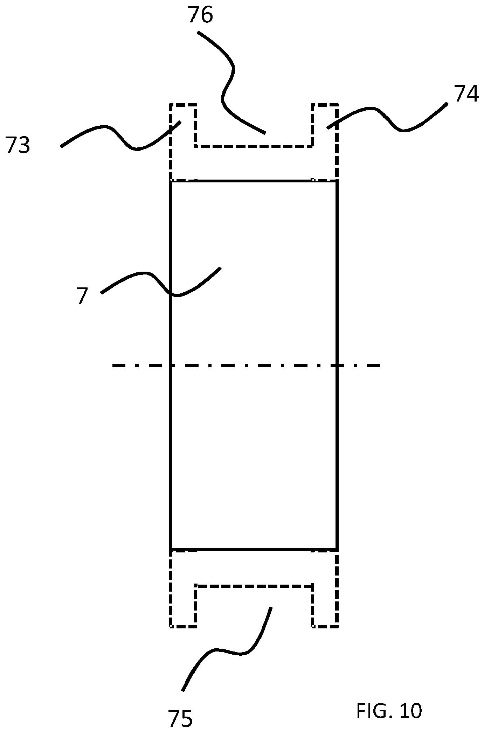

According to an aspect the bearing 7 comprises two flanges 73, 74 that extend radially outwards, as is disclosed in fig. 10. The first flange 73 is extends radially outwards from a first edge of the ring shape of the bearing and the second flange 74 extends radially outwards from an opposite edge of the ring shape. The first and the second flanges 73, 74 together with the ring shape creates a first and a second outward directed U-shape parts 76, 75. The first connecting rod part 2 is configured to be arranged in and/or connected to the first U-shaped part 76. The second connecting rod part 3 is configured to be arranged in and/or connected to the first U-shaped part 75. The flanges 73, 74 restrict movement of the bearing 7 in relation to the first and second connecting rod parts 2, 3 in an axial direction, i.e. in the direction of the crankshaft.

According to an aspect, a first end of the first flange 73 comprises a male connecting part. According to an aspect, a second end of the first flange 73 comprises a female connecting part. According to an aspect, a first end of the second flange 74 comprises a female connecting part. According to an aspect, a second end of the second flange 74 comprises a male connecting part.

According to an aspect, the male part of the first flange 73 is configured to interact with the female part of the second flange 74 and the male part of the second flange 74 is configured to interact with the female part of the first flange when the bearing 7 is mounted around a crankshaft. According to an aspect the connection between the male part of the first flange 73 and the female part of the second flange and the male part of the second flange 74 and the female part of the first flange is configured to align the first part 7a in relation to the second part 7b.

According to an aspect the connection between the male part of the first flange 73 and the female part of the second flange 74 and the male part of the second flange 74 and the female part of the first flange 73 is configured to align the first and the second connecting rod parts 2, 3 when the connecting rod 1 is mounted on a crankshaft. An advantage of this is that the flanges 73, 74 of the bearing 7 could be used to secure that the connecting rod 1 is positioned in an intended way in relation to the crankshaft.

According to an aspect of the connecting rod 1 comprising a first and a second connecting rod part 2, 3, wherein the first connecting rod part 2 is configured to be connected to the second connecting rod part 3 when the connecting rod 1 is assembled around a rod-bearing journal of a crankshaft, wherein a connection between the first and the second connecting rod parts 2, 3 is an adhesive connection.

By coming to the insight that the feature of that a connecting rod needs to be disassembled in a traditional way could be excluded, the connecting rod can be made in new and inventive ways. In fact, the insight as such is an important part of the invention. By providing an adhesive connection between the two connecting rod parts 2, 3, the disadvantages of the otherwise necessary connection elements are overcome and a more durable and lighter construction of the connecting rod and crankshaft assembly is achieved. The adhesive connection means that the connecting rod needs to be disassembled in a new way or not disassembled at all.

A further advantage is that the connection of the two parts 2, 3 of the connecting rod 1 does not need to be pre-tensioned, as is the case with a connection comprising bolts. This reduces the stress on the connecting rod.

According to an aspect the first and the second connecting rod parts 2, 3 are manufactured from a composite material. By having a connecting rod in a composite material it could be demolished in case of replacement of this or possibly bearing elements between the connecting rod of the rod-bearing journal. This is a possibility when using a composite material, such as carbon fiber reinforced resin, as opposed to the normally used metal connecting rods, which would need to be assembled and dissembled using removable connecting elements.

A further advantage of is that the weight of the connection rod could be reduced. The weight of the connection rod could be reduced by more than 50% in relation to a traditional connection rod of metal. Such a reduction will have an impact on the energy consumption of the motor and reduce it. According to an example the weight of a prior art connecting rod was 646g and a connecting rod made of carbon fiber that at least could be used in the same engine and take up the same forces weight 190g. This is a difference of 456g or 70% reduction. In a V8 motor this would lead to a reduction of nearly 4kg of moving weight of the connecting rods and equal that could be taken off the crankshaft.

A further advantage of is that the shape of the connection rod 1 could be made more aerodynamically streamlined to reduce the friction and resistance when it is moved in a motor, which would even further reduce the energy consumption of the engine.

According to an aspect the first and the second connecting rod parts 2, 3 each comprises a first and a second assembly surface 9, 10 that are configured for mutual engagement.

According to an aspect an area of the first and the second assembly surfaces 9, 10 are larger than the area of a cross sectional plane, i.e. the assembly line 4, of the connecting rod 1 at the connection. By having an increased area the adhesive can act over a larger area without increasing the size of the connection rod 1. The increased area extends in different directions and especially in directions that are different than a plane of the cross section at the connection. By this the adhesive connection will not only be exposed to pull/push forces when the connection rod is moving in an engine, but the forces will be shearing forces between the first and the second assembly surfaces 9, 10. An adhesive is much stronger when exposed to shearing forces, i.e. forces acting parallel to the first and the second assembly surfaces.

According to an aspect the first assembly surfaces 9 comprises a first inclined connection area and the second assembly surfaces 10 comprise a second inclined connecting area complimenting the first connection area 9, wherein the surfaces are inclined in relation to the cross sectional plane at the connection to provide an enhanced shear forces resistance in the adhesive connection. By having the inclined connection areas at which the forces are transfer are increased and the transferred forces are shearing forces.

According to an aspect the first assembly surfaces 9 comprises a number of teeth and/or serrations and the second assembly surfaces 10 comprise a number of teeth and/or serrations complimenting the number of teeth or serrations of the first assembly surface. By having a surface that is changing in two directions such as the teeth's or serrations, the connection of the first and the second connecting rod parts 2, 3 could be guided in two directions during assembly.

According to an aspect the first assembly surfaces 9 comprises a first hole in the radial direction and the second assembly surfaces 10 comprises a second hole in the radial direction, wherein the first hole is configured to be aligned with the second hole when the first and the second connecting rod parts 2, 3 are connected. After the first and the second connecting rod parts 2, 3 are connected, a bolt or a plug is inserted in the first and the second hole to further secure the connection of the first connecting rod part 2 to the second connecting rod part 3. In addition the interaction of the bolt and the holes align the position to the first connecting rod part 2 in relation to the second connecting rod part.

According to an aspect one of the first and the second connecting rod parts 2, 3 comprises an indicator part 11, 12 that indicates the correct assembly of the first and the second connecting rod part 2, 3. By having an indicator part it can be seen if the connecting rod is assembled correct or not.

According to an aspect the first assembly surfaces 9 comprises a number of tongues and/or grooves and the second assembly surfaces 10 comprise a number of tongues and/or grooves corresponding to the tongues and grooves of the first assembly surface 9. By having a number of tongues and/or grooves, the connection areas at which the forces are transferred are even further increased and the transferred forces are shearing forces.

According to an aspect the first assembly surfaces 9 comprises a surface structure and the second assembly surfaces 10 comprise a surface structure corresponding to the surface structure of the first assembly surface 9, wherein the surface structure is configured to only allow the surfaces to be connected if the first connecting rod part is position in a predefined position in relation to the second connecting rod part.

According to an aspect the connecting rod 1 further comprising a ring shaped bearing 7 comprising a firs part 7a connected to the first connecting rod part 2 and a second part 7b connected to the second connecting part 10, wherein the ring shaped bearing 7 is configured to be position between the first and the second connecting rod parts 2, 3 and the crankshaft when the connecting rod is assembled to the crankshaft.

According to an aspect the composite fiber comprise one or more of a glass fiber, a carbon fiber, a aramid fiber, a basalt fiber, a natural fiber, a flax fiber and a hemp fiber, or similar.

According to an aspect a crankshaft and connecting rod 1, comprising a crankshaft with at least one rod-bearing journal and at least one connecting rod 1 according the above.

According to an aspect a method of assembling a crankshaft and a connecting rod 1 according to the above. The method comprising the steps of: providing a crankshaft with at least one rod bearing journal, applying an adhesive to the first and/or the second assembly surfaces 9, 10 of the connecting rod 1, pressing the first and the second connecting rod parts 2, 3 together around the one rod bearing journal to assemble the connecting rod 1 to the crankshaft.

According to an aspect the second connecting rod part is arranged in a fixture before connecting it to the first connecting rod part 2. The fixture is according to an aspect used as a tool for alingning the position of the first and second connection rod parts 2, 3 when mounted to the crankshaft.

According to an aspect a method of dissembling the crankshaft and a connecting rod 1 according to the above. The method comprising the steps of: separating the connection rod 1 from the crankshaft by one or more of the steps: heating the connection rod to a temperature at which the adhesive is returned to a liquid form, sawing the connection rod 1 into two pieces or crushing at least parts of the connection rod 1.

According to an aspect the adhesive connection is a permanent connection. By permanent connection means that the connecting rod needs to be demolished in case of replacement of this or possibly bearing elements between the connecting rod of the rod-bearing journal. This is a possibility when using a composite material, such as carbon fiber reinforced resin, as opposed to the normally used metal connecting rods, which would need to be assembled and dissembled using removable connecting elements.

Composite fibers are fibers that are flexible and/or elastic fibers and that can be cured to a fixed state when cured by applying pressure and/or heat to the fibers.

Composite fibers according to an aspect comprise one or more of a glass fiber, a carbon fiber, an aramid fiber, a basalt fiber, a natural fiber, a flax fiber, organic fibers, non organic fibers and a hemp fiber. Composite fibers are according to an aspect used together with a resin / matrix that connects the composite fiber to another composite fiber. According to an aspect the resin / matrix will also be a part of the finished product. According to an aspect the resin / matrix is heated when applied to the fibers to become sticky or adhesive. According to an aspect the matrix could be of thermosetting or thermoplastic material.

One type of composite fibers is carbon fibers. Carbon fibers (sometimes also denoted as CF, graphite fiber or graphite fibre) are fibers that typically have a diameter about 5-10 micrometres being mainly composed of carbon atoms. Carbon fibers typically have several advantages such as e.g. high stiffness, high tensile strength, low weight, high chemical resistance, high temperature tolerance and low thermal expansion. These properties have made the use of carbon fiber very popular in fields such as aerospace, civil engineering, military, and motorsports, along with other competition sports. However, they are typically associated with a higher production cost when compared with similar fibers, such as glass fibers or plastic fibers.

According to an aspect the first and the second connecting rod parts 2, 3 are cut from a board of composite fibers. According to an aspect two or more first and second connecting rod parts 2, 3 are cut from a board of composite fibers. According to an aspect, the direction of the fibers of the board are adapted to the position from where on the board the first connecting rod part 2 and the second connecting rod part 3. By cutting one or more the first and the second connecting rod parts 2, 3 from one and the same board, both the production cost and time of producing the connection rod could be reduced. Further, by cutting the first and the second connecting rod parts 2, 3 from a board of composite fibers the first and the second connection rod parts 2, 3 could be mass produced, in comparison to a custom made production.

According to an aspect the parts of the connection rod 1 is coated with one or more layers of a protective lacquer. The protective lacquer restricts or at least reduces that the material of the connection rod 1 is affected by the chemicals such as oil and the heat of the engine. According to an aspect the surfaces of the connection rod 1 are sealed by a sealing/protecting layer of polymer after it has been machined into the intended shape. The polymer could be a protective lacquer.

To produce the board of composite fibers, several layers of composite fibers are applied to a surface. The orientation and composition of the layers of composite fibers are alternated in relation to the forces and tensions that the connecting rods 1 made from the board will be exposed to. Put in another way, the layers of composite fibers in the board are adapted to the specific connection rods that should be produced from the board. Connection rods 1 that should be used in different engines could have different orientations of the composite layers and different numbers of layers. After the layers of composite fibers are applied to the surface, the package of layers are cured by heat and pressure to cure the layers of composite fibers to become a rigid board of composite fibers. According to an aspect the thickness of the cured board and the number of layers of composite fibers in the board corresponds to the thickness of the connecting rod. After the board has been cured, it can be processed to become one or more connecting rods 1. Different types of processing steps, such as abrasive and drilling, could be used to produce the connection rod. By producing the connection rods from the board, the manufacturing process could be made fully automated. Further, the tool for making the board is not delimited to a specific shape of connecting rod, i.e. the tool for producing the board could be used for production of connection rods of different shapes and compositions.

Composite fibers are usually combined with other materials. When impregnated with a resin / matrix, it becomes a prepreg which when heated forms a composite-fiber-reinforced polymer (often referred to as composite fibre) which has a very high strength-to-weight ratio, and is extremely rigid although somewhat brittle.

Hence, composite fibers are a versatile material, which is applicable in a wide range of uses and areas. However, common for all uses is that the composite fibers will have to be formed into a desired shape, and then cured in order to obtain maximum durability.

The parts of the assistive feature may be interchanged between the two connecting rod parts without deviating from the functional principles of this feature. Hereby an indication of a fully and correct positioned assembling of the two connecting rod parts when assembly around a rod-bearing journal of a crankshaft is established. Other types of indicators may be provided where a snap fit of the arm and the engagement part provides the correct position indication.

The person skilled in the art realizes that the present invention by no means is limited to the preferred embodiments described above. On the contrary, the invention is limited by the scope of the appended claims. For example, a sliding door set may comprise of more than two sliding door leafs, arranged in the same way as discussed above.

The description of the aspects of the disclosure provided herein has been presented for purposes of illustration. The description is not intended to be exhaustive or to limit aspects of the disclosure to the precise form disclosed, and modifications and variations are possible in light of the above teachings or may be acquired from practice of various alternatives to the provided aspects of the disclosure. The examples discussed herein were chosen and described in order to explain the principles and the nature of various aspects of the disclosure and its practical application to enable one skilled in the art to utilize the aspects of the disclosure in various manners and with various modifications as are suited to the particular use contemplated. The features of the aspects of the disclosure described herein may be combined in all possible combinations of methods, apparatus, modules, systems, and computer program products. It should be appreciated that the aspects of the disclosure presented herein may be practiced in any combination with each other.

It should be noted that the word "comprising" does not necessarily exclude the presence of other elements or steps than those listed. It should further be noted that any reference signs do not limit the scope of the claims.

## Claims

1. A connecting rod (1) for a combustion engine, the connecting rod (1) comprising a first connecting rod part (2) and a second connecting rod part (3),
wherein the first connecting rod part and the second connecting rod part are manufactured from a board of composite fibers made of multiple layers of composite fibers, wherein the thickness of the cured board and the number of layers of composite fibers in the board corresponds to the thickness of the connecting rod,
wherein the first connecting rod part (2) is configured to be connected to the second connecting rod part (3) when the connecting rod (1) is assembled around a rod-bearing journal of a crankshaft,
wherein a connection between the first and the second connecting rod parts (2, 3) is an adhesive connection
wherein the first and the second connecting rod parts (2, 3) each comprise a first and a second assembly surfaces (9, 10) that are configured for mutual engagement,
wherein the first assembly surfaces (9) comprises a number of teeth and/or grooves and the second assembly surfaces (10) comprises a number of teeth and/or grooves corresponding to the teeth and grooves of the first assembly surface (9),
wherein the teeth and grooves are provided with a general direction perpendicular with a rotational axis of the rod bearing journal.

2. The connecting rod (1) according to any of claim 1, wherein one of the first and the second connecting rod part (2, 3) comprises an indicator part (11, 12) that indicates the correct assembly of the first and the second connecting rod parts (2, 3).

3. The connecting rod (1) according to claim 1 or 2, wherein the first assembly surfaces (9) comprises a surface structure and the second assembly surfaces (10) comprise a surface structure corresponding to the surface structure of the first assembly surface, wherein the surface structure is configured to only allow the surfaces to be connected if the first connecting rod part (2) is position in a predefined position in relation to the second connecting rod part (3).

4. The connecting rod (1) according to any of the proceeding claims, further comprising a ring shaped bearing (7) comprising a firs part (7a) connected to the first connecting rod part (2) and a second part (7b) connected to the second connecting part (3), wherein the ring shaped bearing (7) is configured to be position between the first and the second connecting rod parts (2, 3) and the crankshaft when the connecting rod (1) is assembled to the crankshaft.

5. The connecting rod (1) according to claim 10, wherein the first part (7a) and the second part (7b) has a block arc shape.

6. The connecting rod (1) according to claims 4 or 5, wherein a first end (71a) of the first part (7a) comprises a male connecting part (71a), a second end (72a) of the first part (7a) comprises a female connecting part (72a), a first end (71b) of the second part (7b) comprises a female connecting part (71b), a second end (72b) of the second part (7b) comprises a male connecting part (72b) and wherein the male part (71a) of the first part (7a) is configured to interact with the female part (71b) of the second part (7b) and the male part (72b) of the second part (7b) is configured to interact with the female part (72a) of the first part (7a) when the bearing (7) is mounted around a crank shaft.

7. The connecting rod (1) according to claim 6, wherein the connection of the male part (71a) of the first part (7a) and the female part (71b) of the second part (7b) and the male part (72b) of the second part (7b) and the female part (72a) of the first part (7a) is configured to align the first part (7a) in relation to the second part (7b).

8. The connecting rod (1) according to claims 6 or 7, wherein the connection between the male part (71a) of the first part (7a) and the female part (71b) of the second part (7b) and the male part (72b) of the second part (7b) and the female part (72a) of the first part (7a) is configured to align the first and the second connecting rod parts (2, 3) when the connecting rod (1) is mounted on a crankshaft.

9. The connecting rod (1) according to any of claims 4-8, wherein the first part (7a) is connected to the first connecting rod part (2) and the second part (7b) is connected to the second connecting rod part (3).

10. The connecting rod (1) according to claim 9, wherein the first part (7a) is glued to the first connecting rod part (2) and the second part (7b) is glued to the second connecting rod part (3); and wherein the adhesive that connects the first and second part (7a, 7b) to the first and the second connecting rod parts (2, 3) is an adhesive that is configured to transfer heat.

11. The connecting rod (1) according to any of claims 4-10, wherein the bearing (7) comprises two flanges (73, 74) that extend radially outwards, wherein the first flange (73) extends radially outwards from a first edge of the ring shape of the bearing (7) and the second flange (74) extends radially outwards from an opposite edge of the ring shape of the bearing (7).

12. A method of assembling a crankshaft and a connecting rod (1) according to any of claims 1-11, the method comprising the steps of
- providing a crankshaft with at least one rod bearing journal,
- applying an adhesive to the first and/or the second assembly surfaces (9, 10) of the connecting rod (1),
- pressing the first and the second connecting rod parts (2, 3) together around the one rod bearing journal to assemble the connecting rod (1) to the crankshaft.

13. A method of dissembling the crankshaft and a connecting rod (1) according to any of claims 1-11, the method comprising the steps of:
- separating the connection rod (1) from the crankshaft by one or more of the steps: heating the connection rod (1) to a temperature at which the adhesive is returned to a liquid form, sawing the connection rod (1) into two pieces or crushing at least parts of the connection rod (1).

14. A method of manufacturing a connection rod (1) according to any of claims 1-11, the method comprising the steps of producing a board of composite fibers, processing the board by an abrasive process to producing one or more connecting rods (1) according to any of claims 1-11 from the board.

15. The method according to claim 14, wherein the step of producing the board comprises the steps of applying several layers of composite fibers to a surface, wherein the directions and composition of the layers are adapted to the position, size, shape and/or the type of connecting rod (1) that should be manufactured.

## Patentansprüche

1. Pleuelstange (1) für einen Verbrennungsmotor, wobei die Pleuelstange (1) einen ersten Pleuelstangenteil (2) und einen zweiten Pleuelstangenteil (3) umfasst,
wobei der erste Pleuelstangenteil und der zweite Pleuelstangenteil aus einem Brett von Verbundfasern hergestellt sind, das aus mehreren Schichten von Verbundfasern besteht, wobei die Dicke des gehärteten Brettes und die Anzahl von Schichten von Verbundfasern in dem Brett der Dicke der Pleuelstange entspricht,
wobei der erste Pleuelstangenteil (2) dazu konfiguriert ist, mit dem zweiten Pleuelstangenteil (3) verbunden zu werden, wenn die Pleuelstange (1) um einen Stangenlagerzapfen einer Kurbelwelle zusammengebaut wird,
wobei eine Verbindung zwischen dem ersten und dem zweiten Pleuelstangenteil (2, 3) eine Haftverbindung ist,
wobei der erste und der zweite Pleuelstangenteil (2, 3) jeweils eine erste und eine zweite Zusammenbaufläche (9, 10) umfassen, die dazu konfiguriert sind, gegenseitig ineinanderzugreifen,
wobei die ersten Zusammenbauflächen (9) eine Anzahl von Zähnen und/oder Nuten umfassen und die zweiten Zusammenbauflächen (10) eine Anzahl von Zähnen und/oder Nuten umfassen, die den Zähnen und Nuten der ersten Zusammenbauflächen (9) entsprechen,
wobei die Zähne und Nuten mit einer allgemeinen Richtung bereitgestellt sind, die senkrecht zu einer Drehachse des Stangenlagerzapfens ist.

2. Pleuelstange (1) nach Anspruch 1, wobei einer des ersten und des zweiten Pleuelstangenteils (2, 3) einen Anzeigeteil (11, 12) umfasst, der den richtigen Zusammenbau des ersten und des zweiten Pleuelstangenteils (2, 3) anzeigt.

3. Pleuelstange (1) nach Anspruch 1 oder 2, wobei die ersten Zusammenbauflächen (9) eine Flächenstruktur umfassen und die zweiten Zusammenbauflächen (10) eine Flächenstruktur umfassen, die der Flächenstruktur der ersten Zusammenbaufläche entspricht, wobei die Flächenstruktur dazu konfiguriert ist, den Flächen nur zu ermöglichen, verbunden zu werden, wenn der erste Pleuelstangenteil (2) in einer vordefinierten Position in Bezug auf den zweiten Pleuelstangenteil (3) positioniert ist.

4. Pleuelstange (1) nach einem der vorhergehenden Ansprüche, ferner umfassend ein ringförmiges Lager (7), das einen ersten Teil (7a), der mit dem ersten Pleuelstangenteil (2) verbunden ist, und einen zweiten Teil (7b), der mit dem zweiten Pleuelstangenteil (3) verbunden ist, umfasst, wobei das ringförmige Lager (7) dazu konfiguriert ist, zwischen dem ersten und dem zweiten Pleuelstangenteil (2, 3) und der Kurbelwelle positioniert zu werden, wenn die Pleuelstange mit der Kurbelwelle zusammengebaut wird.

5. Pleuelstange (1) nach Anspruch 10, wobei der erste Teil (7a) und der zweite Teil (7b) eine Halbbogenform aufweisen.

6. Pleuelstange (1) nach Anspruch 4 oder 5, wobei ein erstes Ende (71a) des ersten Teiles (7a) einen einführenden Verbindungsteil (71a) umfasst, ein zweites Ende (72a) des ersten Teiles (7a) einen aufnehmenden Verbindungsteil (72a) umfasst, ein erstes Ende (71b) des zweiten Teiles (7b) einen aufnehmenden Verbindungsteil (71b) umfasst, ein zweites Ende (72b) des zweiten Teiles (7b) einen einführenden Verbindungsteil (72b) umfasst und wobei der einführende Teil (71a) des ersten Teiles (7a) dazu konfiguriert ist, mit dem aufnehmenden Teil (71b) des zweiten Teiles (7b) zu interagieren, und der einführende Teil (72b) des zweiten Teiles (7b) dazu konfiguriert ist, mit dem aufnehmenden Teil (72a) des ersten Teiles (7a) zu interagieren, wenn das Lager (7) um eine Kurbelwelle herum montiert ist.

7. Pleuelstange (1) nach Anspruch 6, wobei die Verbindung des einführenden Teiles (71a) des ersten Teiles (7a) mit dem aufnehmenden Teil (71b) des zweiten Teiles (7b) und des einführenden Teiles (72b) des zweiten Teiles (7b) mit dem aufnehmenden Teil (72a) des ersten Teiles (7a) dazu konfiguriert ist, den ersten Teil (7a) in Bezug auf den zweiten Teil (7b) auszurichten.

8. Pleuelstange (1) nach einem der Ansprüche 6 oder 7, wobei die Verbindung zwischen dem einführenden Teil (71a) des ersten Teiles (7a) und dem aufnehmenden Teil (71b) des zweiten Teiles (7b) und dem einführenden Teil (72b) des zweiten Teiles (7b) und dem aufnehmenden Teil (72a) des ersten Teiles (7a) dazu konfiguriert ist, den ersten und den zweiten Pleuelstangenteil (2, 3) auszurichten, wenn die Pleuelstange (1) auf einer Kurbelwelle montiert ist.

9. Pleuelstange (1) nach einem der Ansprüche 4-8, wobei der erste Teil (7a) mit dem ersten Pleuelstangenteil (2) verbunden ist und der zweite Teil (7b) mit dem zweiten Pleuelstangenteil (3) verbunden ist.

10. Pleuelstange (1) nach Anspruch 9, wobei der erste Teil (7a) an den ersten Pleuelstangenteil (2) geklebt ist und der zweite Teil (7b) an den zweiten Pleuelstangenteil (3) geklebt ist; und wobei der Haftstoff, der den ersten und den zweiten Teil (7a, 7b) mit dem ersten und dem zweiten Pleuelstangenteil (2, 3) verbindet, ein Haftstoff ist, der dazu konfiguriert ist, Hitze zu übertragen.

11. Pleuelstange (1) nach einem der Ansprüche 4-10, wobei das Lager (7) zwei Flansche (73, 74) umfasst, die sich radial nach außen erstrecken, wobei sich der erste Flansch (73) von einem ersten Rand der Ringform des Lagers (7) radial nach außen erstreckt und sich der zweite Flansch (74) von einem gegenüberliegenden Rand der Ringform des Lagers (7) radial nach außen erstreckt.

12. Verfahren zum Zusammenbauen einer Kurbelwelle und einer Pleuelstange (1) nach einem der Ansprüche 1-11, wobei das Verfahren die folgenden Schritte umfasst:
- Bereitstellen einer Kurbelwelle mit mindestens einem Stangenlagerzapfen,
- Anbringen eines Haftstoffs auf die ersten und/oder die zweiten Zusammenbauflächen (9, 10) der Pleuelstange (1),
- Zusammenpressen des ersten und des zweiten Pleuelstangenteils (2,3) um den einen Stangenlagerzapfen herum, um die Pleuelstange (1) mit der Kurbelwelle zusammenzubauen.

13. Verfahren zum Auseinanderbauen der Kurbelwelle und einer Pleuelstange (1) nach einem der Ansprüche 1-11, wobei das Verfahren die folgenden Schritte umfasst:
- Trennen der Pleuelstange (1) von der Kurbelwelle durch einen oder mehrere der folgenden Schritte: Erhitzen der Pleuelstange (1) auf eine Temperatur, bei der der Haftstoff in eine flüssige Form zurückversetzt wird, Sägen der Pleuelstange (1) in zwei Stücke oder Zerbrechen von mindestens Teilen der Pleuelstange (1).

14. Verfahren zum Herstellen einer Pleuelstange (1) nach einem der Ansprüche 1-11, wobei das Verfahren die folgenden Schritte umfasst: Produzieren eines Brettes von Verbundfasern, Verarbeiten des Brettes durch einen abrasiven Prozess, um eine oder mehrere Pleuelstangen (1) nach einem der Ansprüche 1-11 aus dem Brett zu produzieren.

15. Verfahren nach Anspruch 14, wobei der Schritt des Produzierens des Brettes die Schritte des Anbringens verschiedener Schichten von Verbundfasern auf eine Fläche umfasst, wobei die Richtungen und Zusammensetzung der Schichten an die Position, die Größe, die Form und/oder die Art der Pleuelstange (1), die herzustellen ist, angepasst sind.

## Revendications

1. Bielle (1) pour un moteur à combustion, la bielle (1) comprenant une première partie de bielle (2) et une seconde partie de bielle (3),
dans laquelle la première partie de bielle et la seconde partie de bielle sont fabriquées à partir d'un panneau de fibres composites constitué de multiples couches de fibres composites, dans laquelle l'épaisseur du panneau durci et le nombre de couches de fibres composites dans le panneau corresponde à l'épaisseur de la bielle,
dans laquelle la première partie de bielle (2) est conçue pour être reliée à la seconde partie de bielle (3) lorsque la bielle (1) est montée autour d'un tourillon de roulement de bielle d'un vilebrequin,
dans laquelle une liaison entre la première et la seconde parties de bielle (2, 3) est une liaison adhésive
dans laquelle la première et la seconde parties de bielle (2, 3) comprennent chacune une première et une seconde surfaces de montage (9, 10) qui sont conçues pour une mise en prise mutuelle,
dans laquelle les premières surfaces de montage (9) comprennent un certain nombre de dents et/ou de rainures et les secondes surfaces de montage (10) comprennent un certain nombre de dents et/ou de rainures correspondant aux dents et rainures de la première surface de montage (9),
dans laquelle les dents et rainures sont dotées d'une direction générale perpendiculaire à un axe de rotation du tourillon de roulement de bielle.

2. Bielle (1) selon la revendication 1, dans laquelle l'une parmi la première et la seconde partie de bielle (2, 3) comprend une partie indicatrice (11, 12) qui indique le montage correct de la première et de la seconde parties de bielle (2, 3).

3. Bielle (1) selon la revendication 1 ou 2, dans laquelle les premières surfaces de montage (9) comprennent une structure de surface et les secondes surfaces de montage (10) comprennent une structure de surface correspondant à la structure de surface de la première surface de montage, dans laquelle la structure de surface est conçue pour permettre aux surfaces d'être reliées uniquement si la première partie de bielle (2) est positionnée dans une position prédéfinie par rapport à la seconde partie de bielle (3).

4. Bielle (1) selon l'une quelconque des revendications précédentes, comprenant en outre un roulement en forme d'anneau (7) comprenant une première partie (7a) reliée à la première partie de bielle (2) et une seconde partie (7b) reliée à la seconde partie de liaison (3), dans laquelle le roulement en forme d'anneau (7) est conçu pour être positionné entre la première et la seconde parties de bielle (2, 3) et le vilebrequin lorsque la bielle (1) est montée sur le vilebrequin.

5. Bielle (1) selon la revendication 10, dans laquelle la première partie (7a) et la seconde partie (7b) ont une forme d'arc de bloc.

6. Bielle (1) selon les revendications 4 ou 5, dans laquelle une première extrémité (71a) de la première partie (7a) comprend une partie de liaison mâle (71a), une seconde extrémité (72a) de la première partie (7a) comprend une partie de liaison femelle (72a), une première extrémité (71b) de la seconde partie (7b) comprend une partie de liaison femelle (71b), une seconde extrémité (72b) de la seconde partie (7b) comprend une partie de liaison mâle (72b) et
dans laquelle la partie mâle (71a) de la première partie (7a) est conçue pour interagir avec la partie femelle (71b) de la seconde partie (7b) et la partie mâle (72b) de la seconde partie (7b) est conçue pour interagir avec la partie femelle (72a) de la première partie (7a) lorsque le roulement (7) est monté autour d'un vilebrequin.

7. Bielle (1) selon la revendication 6, dans laquelle la liaison entre la partie mâle (71a) de la première partie (7a) et la partie femelle (71b) de la seconde partie (7b) et la partie mâle (72b) de la seconde partie (7b) et la partie femelle (72a) de la première partie (7a) est conçue pour aligner la première partie (7a) par rapport à la seconde partie (7b).

8. Bielle (1) selon les revendications 6 ou 7, dans laquelle la liaison entre la partie mâle (71a) de la première partie (7a) et la partie femelle (71b) de la seconde partie (7b) et la partie mâle (72b) de la seconde partie (7b) et la partie femelle (72a) de la première partie (7a) est conçue pour aligner la première et la seconde parties de bielle (2, 3) lorsque la bielle (1) est montée sur un vilebrequin.

9. Bielle (1) selon l'une quelconque des revendications 4 à 8, dans laquelle la première partie (7a) est reliée à la première partie de bielle (2) et la seconde partie (7b) est reliée à la seconde partie de bielle (3).

10. Bielle (1) selon la revendication 9, dans laquelle la première partie (7a) est collée à la première partie de bielle (2) et la seconde partie (7b) est collée à la seconde partie de bielle (3) ; et dans laquelle l'adhésif qui relie les première et seconde parties (7a, 7b) aux première et seconde parties de bielle (2, 3) est un adhésif qui est conçu pour transférer de la chaleur.

11. Bielle (1) selon l'une quelconque des revendications 4 à 10, dans laquelle le roulement (7) comprend deux brides (73, 74) qui s'étendent radialement vers l'extérieur, dans laquelle la première bride (73) s'étend radialement vers l'extérieur à partir d'un premier bord de la forme d'anneau du roulement (7) et la seconde bride (74) s'étend radialement vers l'extérieur à partir d'un bord opposé de la forme d'anneau du roulement (7).

12. Procédé de montage d'un vilebrequin et d'une bielle (1) selon l'une quelconque des revendications 1 à 11, le procédé comprenant les étapes :
- de fourniture d'au moins un tourillon de roulement de bielle à un vilebrequin,
- d'application d'un adhésif sur la première et/ou la seconde surfaces de montage (9, 10) de la bielle (1),
- de pressage de la première et de la seconde parties de bielle (2, 3) l'une contre l'autre autour du tourillon de roulement de bielle pour monter la bielle (1) sur le vilebrequin.

13. Procédé de démontage du vilebrequin et d'une bielle (1) selon l'une quelconque des revendications 1 à 11, le procédé comprenant les étapes :
- de séparation de la bielle (1) du vilebrequin par une ou plusieurs des étapes : de chauffage de la bielle (1) à une température à laquelle l'adhésif revient sous forme liquide, de sciage de la bielle (1) en deux morceaux ou d'écrasement d'au moins des parties de la bielle (1).

14. Procédé de fabrication d'une bielle (1) selon l'une quelconque des revendications 1 à 11, le procédé comprenant les étapes de production d'un panneau de fibres composites, de traitement du panneau par un processus abrasif pour produire une ou plusieurs bielles (1) selon l'une quelconque des revendications 1 à 11 à partir du panneau.

15. Procédé selon la revendication 14, dans lequel l'étape de production du panneau comprend les étapes d'application de plusieurs couches de fibres composites sur une surface, dans lequel les directions et la composition des couches sont adaptées à la position, la taille, la forme et/ou le type de bielle (1) à fabriquer.
